# EUROPEAN PATENT SPECIFICATION

(11) **EP 2 727 467 B1**
(45) Date of publication and mention of the grant of the patent: **07.12.2016**
(21) Application number: 12190500.4
(22) Date of filing: 30.10.2012
(51) Int. Cl.: A21C 9/06, A21C 3/02

(54) **Ravioli making machine**
Vorrichtung zur Herstellung von Ravioli
Machine pour la fabrication de ravioli

(43) Date of publication of application: 07.05.2014
(73) Proprietor: Porcari, Gabriele, 29010 Alseno (PC) (IT)
(72) Inventor: Porcari, Gabriele, 29010 Alseno (PC) (IT)
(74) Representative: Benelli, Cristian

(56) References cited:
- EP-A2- 2 505 066
- FR-A- 1 445 076
- GB-A- 1 370 398
- US-A- 1 844 142
- US-A- 3 605 641
- US-A- 3 917 856
- US-A1- 2007 122 516

## Description

### FIELD OF APPLICATION OF THE INVENTION

The present invention is related to a modular machine capable of continuously producing ravioli, starting from the dough. In other words, the modular machine is able to continuously carry out the process from dough to finished product (ravioli).

### STATE OF THE ART

Ravioli makers present on the market employ a dough previously prepared in separate standalone apparatuses. Dough, starting raw material for ravioli makers available today on the market, results from a second processing in a dough machine, which produces pasta strips often wound up on rollers.

Ravioli makers commercially available must, therefore, be equipped with suitable devices to receive dough as previously processed by kneading and dough machines.

From the above it is understood that the ravioli manufacturing process is carried out today by physically distinct machines, which normally operate in different moments. Each one of such machines is a stand-alone unit, independent from the others, with its own structure, motor-drive, electric system, safety devices, manufacturing and maintenance space requirements.

An example of the known art is disclosed in EP2505066 which relates to a modular machine capable of continuously making ravioli from a dough. The described machine utilizes in combination a kneader and a sheeter; the kneader is capable of kneading by a planetary-type mixer, the pasta components for ravioli and is driven by an electric motor capable of transmitting the motion to all the other operating members of the other modules so that they are always in phase one to the other, a gradual discharge device of the "kneader" module comprising an auger driven by the same electric motor of the group; in addition to that, a sheeter for producing the sheet is present, and receives the dough discharged by the auger, continuously produces the sheet of which it is easily adjustably the thickness through a knob, said sheet being then laid down and conveyed on a belt.

### DISCLOSURE AND ADVANTAGES OF THE INVENTION

The object of the present invention is to make available for the art a modular machine, comprised of mechanical assemblies capable of carrying out all different steps in the process, driven by only one motor, in order to continuously produce ravioli starting from the dough, reducing costs and dimensions, and capable of achieving, at the same time, an improvement in quality of the finished product.

A second object of the present invention is to provide a modular machine with a system or device for introducing the dough in the kneading module.

The abovementioned mechanism comprises at least one rotary tool, also referred to as reel, provided with a plurality of tips or projections extending perpendicular with respect to the axis of rotation and suitable for breaking the dough and facilitating its insertion between the kneading machine rollers. The tool is positioned above, and according to the rotation axis of underlying pinch rollers, so that the tips are disposed orthogonally with respect to the rollers and between the same.

A further object is to make available for the art a device, applied to the modular machine, adapted to facilitate separation of the so formed ravioli; continuous production of ravioli allows them, once formed, to remain joined together: a brush cylinder is disposed at the end of the forming line and, axially and transversally rotating with respect to the ravioli outlet direction, interacts with bristles thereof (in plastic material) and causes correct separation of the ravioli by impinging on them.

Features and advantages of the present invention will be apparent from the following description of a possible, non-limitative embodiment thereof, provided with reference to the attached Figures.

Said object and advantages are all achieved by the modular ravioli maker, object of the present invention, which is characterized by the appended claim below.

### BRIEF DESCRIPTION OF THE FIGURES

This and other features will be more apparent from the following description of a number of embodiments thereof illustrated, only by way of simplifying and nonlimiting example, in the drawings of the Figures.

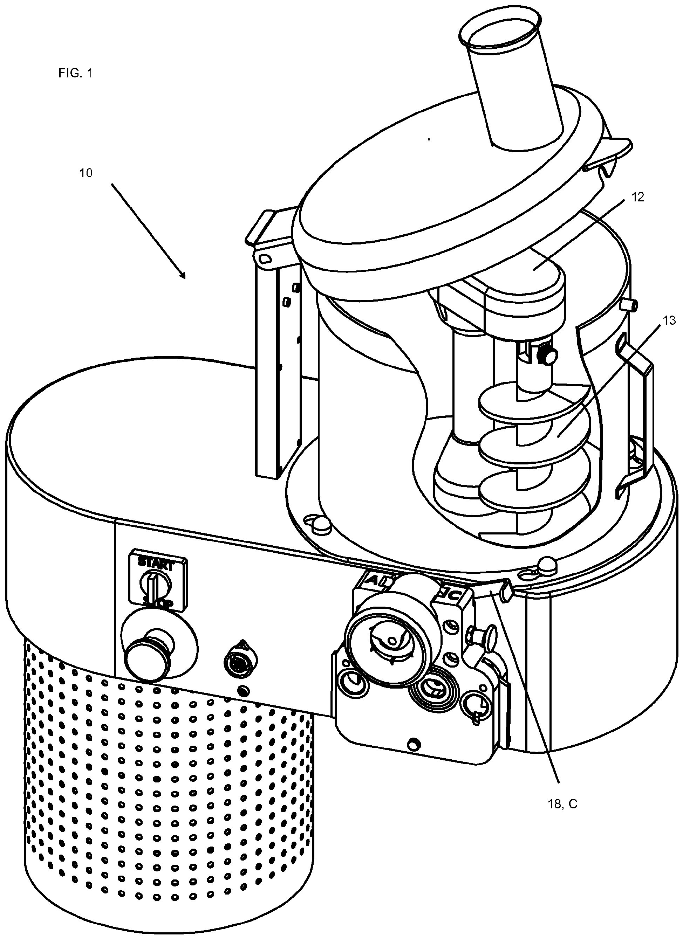

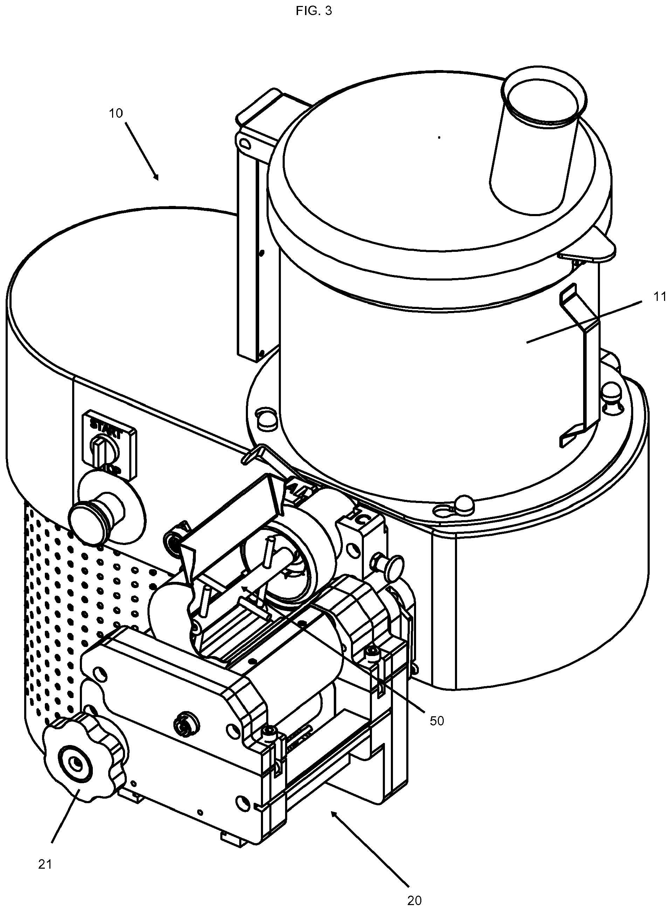

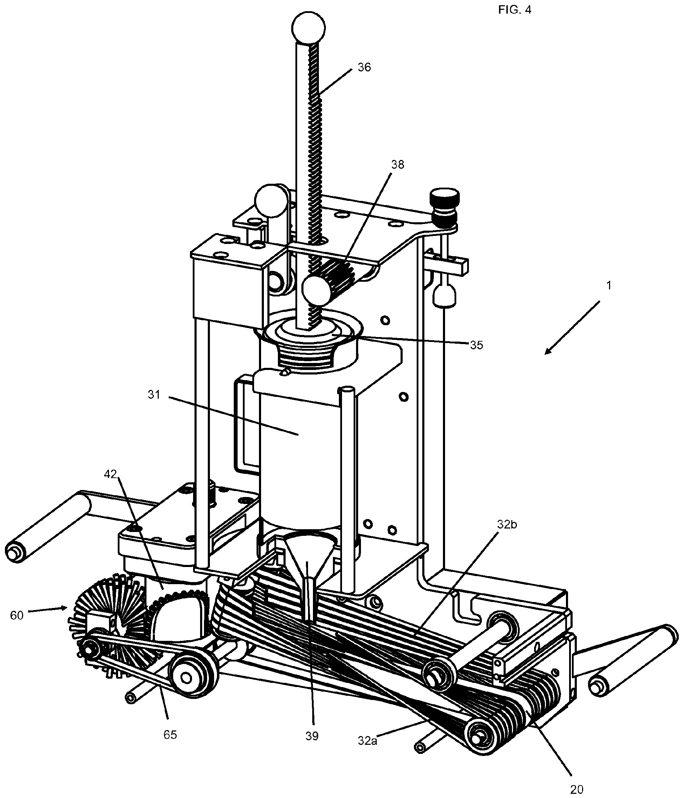

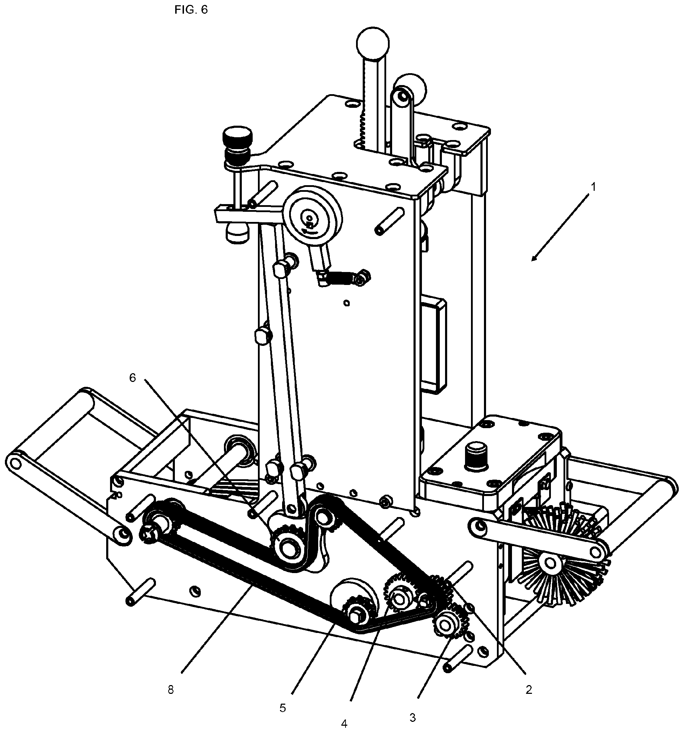

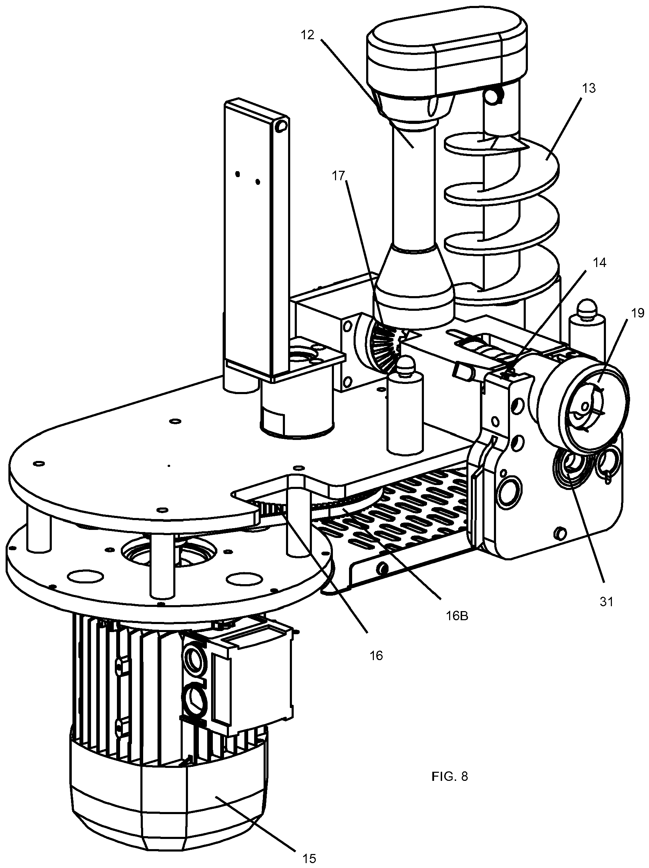

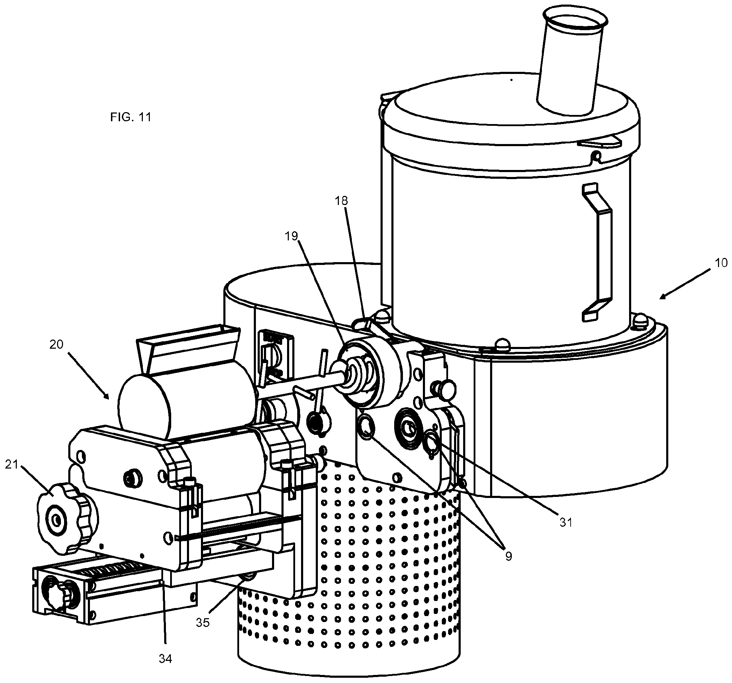

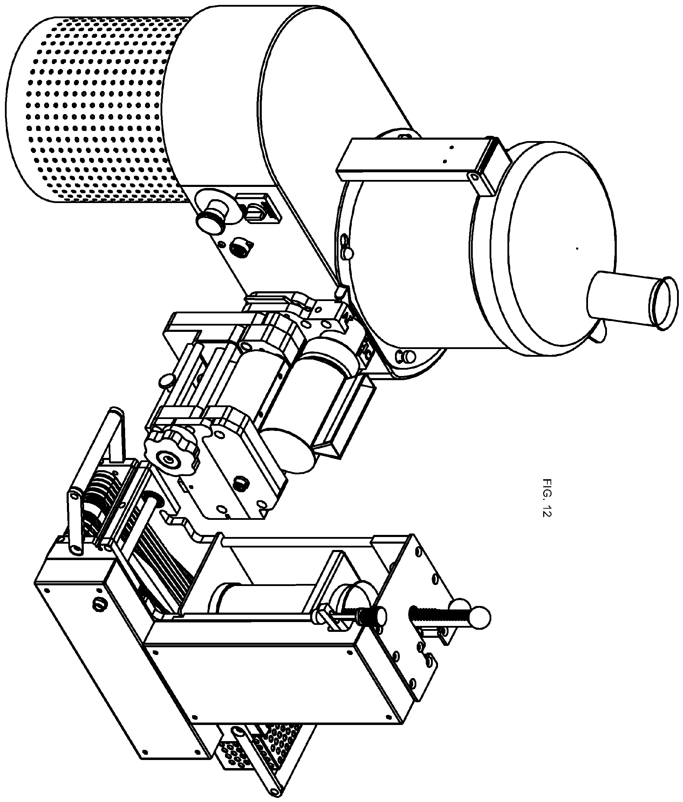

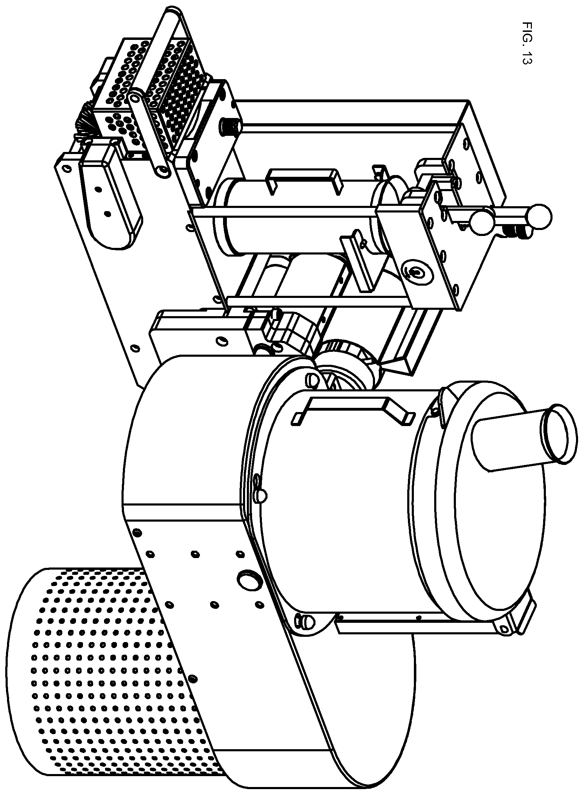

Figures 1 to 14 show several views of the modular ravioli maker, comprising modules 1, 10, 20 suitable for filling the formed dough and forming the ravioli, respectively, the kneading machine and the dough machine.

### DESCRIPTION OF THE INVENTION

Particularly referring to the aforesaid Figures, in the following, the modular machine made up by three modules 1, 10 and 20, is described.

First module 10 is a kneading assembly comprising a vertical cylindrical receptacle, made of AISI 304 stainless steel, having at its interior a planetary mixer 12 comprised of a spiral 13 which rotates around its own axis; said axis, in turn, being rotatable around the center vertical of receptacle 11: the combination of motions causes the mixer to rotate while moving within the vessel, thus allowing optimal mixing, melding and kneading.

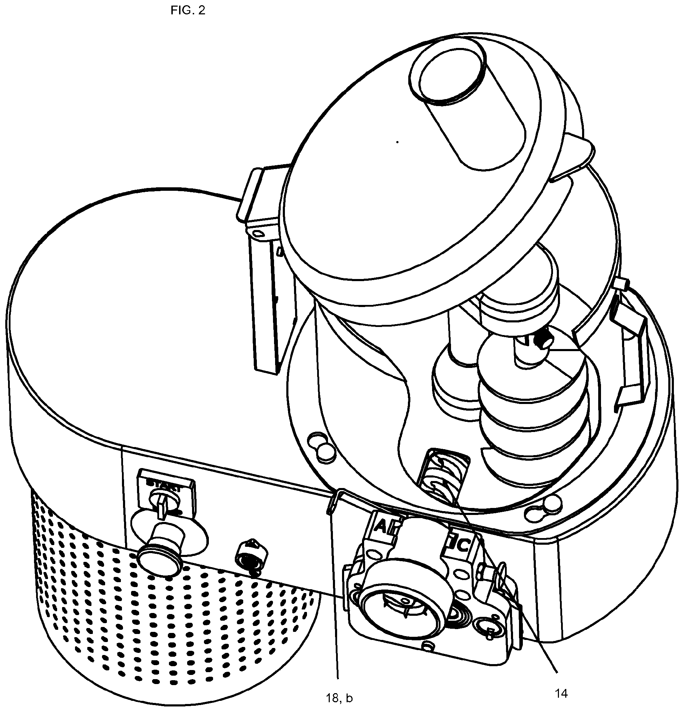

Figure 2 is a section plane of the interior of the receptacle, in which a discharge feed screw 14, driven by the single motor 15 of the machine subject hereof, through a set of gears 16 and a bevel gear pair 17. After kneading is completed, a gate on the bottom of receptacle 11 is opened by moving lever 18 from position c, in Figure 1, to position b, in Figure 2, and the product runs down into feed screw 14 which discharges it in the second module or assembly 20 suitable for making dough.

Before describing said second module 20, a mechanism 50 has to be noticed, in the inlet duct, which is suitable for facilitating insertion of the dough in the kneading module.

The aforesaid mechanism 50 is a rotatable reel, comprised of a central rod 51 and a plurality of tips o projections 52, which extend radially therefrom with respect to the axis of the rod itself.

Projections 52 function to break the dough and facilitate insertion thereof between rollers 58 of module 20, illustrated in the last drawing 14.

Mechanism 50 is located above module 20, near the dough inlet.

Rod 51 is coaxial and integral with the axis of said screw feeder 14 from which it is set into motion; in other words, it is parallel to the axis of rotation of underlying pick-up rollers 58, so that the tips are disposed perpendicularly with respect to said axis.

As already mentioned, second module 20 is suitable for making dough: by steadily receiving the dough, as it is discharged from the screw feed, continuously produces dough, the thickness of which is easily adjustable through a handle 21.

The produced dough is laid on transport means 21, a belt that conveys it below cylindrical cup 31 which may contain the stuffing for ravioli.

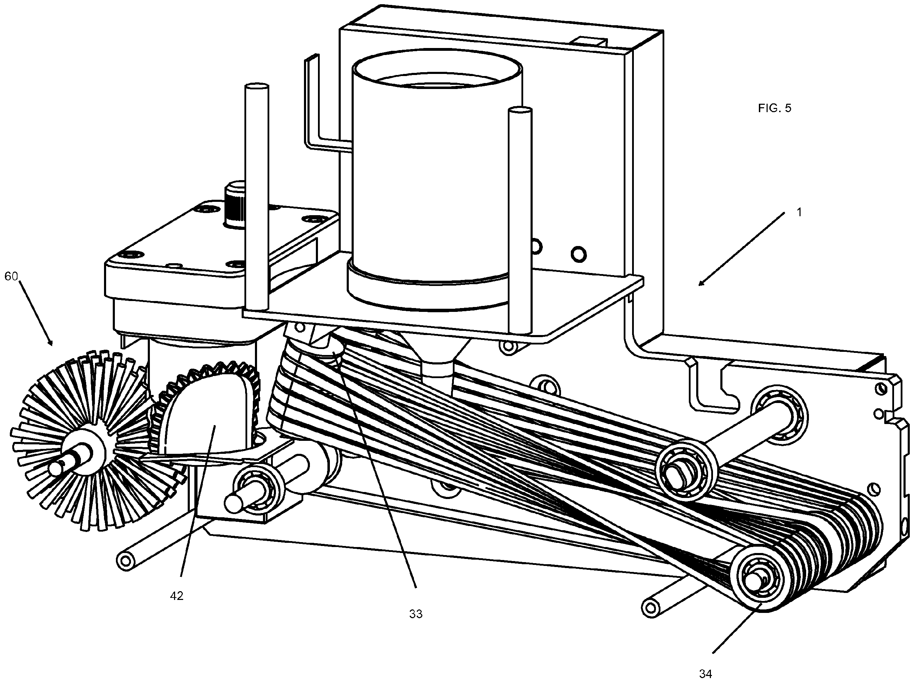

As can well be seen in Figure 5, along the two sides of conveyor 21 there are two set of belts 32a, 32b, reeled up, initially, on horizontal pulleys 33, but, on return, on pulleys 34 slanting until almost vertical. The purpose of this arrangement is, as will be more clear in the following, to longitudinally fold the sheet in two laps, enclosing the stuffing at its interior, after dosing thereof.

Within cup 31, a piston 35, actuated by a rack 36, keeps the stuffing downwardly under pressure. An adjustable ball torque-limiting device, coaxial with gear 38 which actuates the rack, prevents pressure to exceed the threshold value set by the operator.

The amount of stuffing falling on the dough as a valve 39 opens, operated by associated step motor (not shown) rotating by 90°, alternately clockwise and counter-clockwise, following a signal transmitted by a sensor which senses the smooth roller position, that is, in the mold, the one opposing the shaped roller 42, providing the ravioli with their peculiar shape, by means of strikers 43 (holes or grooves) formed on the smooth roller itself.

The machine can produce ravioli of different shapes: for each ravioli shape, it is possible to install a mold with a smooth roller having strikers matching the contours of the corresponding shaped roller.

Each rotation of the valve 39 in one direction corresponds to opening the same, and, hence, dropping a prescribed amount of stuffing. Each reverse rotation corresponds to closing the valve. The amount of product dispensed during the valve opening time depends on the pressure of piston 35. The doses are always in phase with rotation of the mold, since, as mentioned above, the signal originates from the latter.

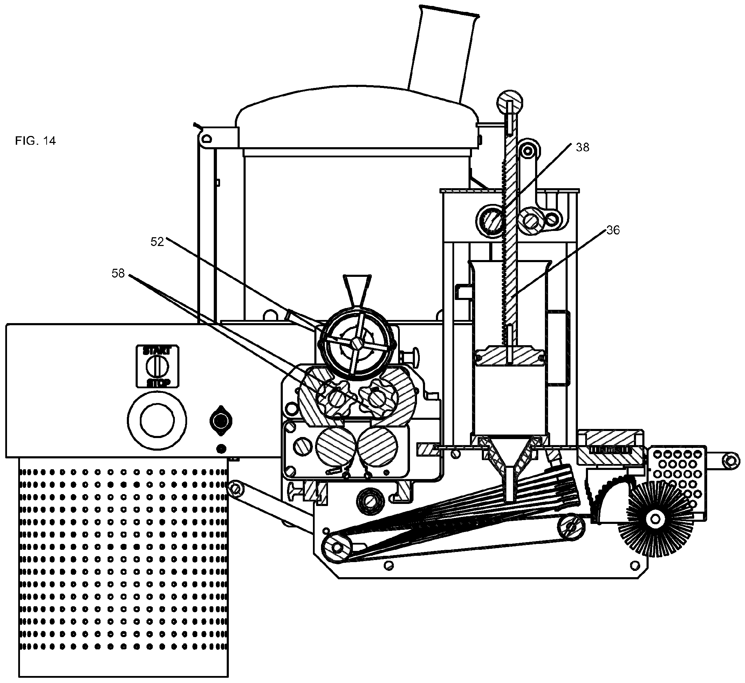

After receiving the prescribed amount of stuffing, the dough advances carried by conveyor 31, but belts 32a and 32b, passing along its sides from horizontal pulleys to idler pulleys in an almost vertical position (Figures 5 and 14 in detail), lifts the dough edges; longitudinally folding it, starting from the center line, so that it encloses the stuffing within the two up-folded dough sheets.

The dough, doubled as mentioned, proceeds with continuous motion until the mold, formed by shaped roller 42 bearing against the smooth roller, both rotating about a vertical axis. The mold closes the two pasta sheets enclosing the prescribed amount of stuffing, forming one or more ravioli with each turn, according to the number of impressions on the shaped roller.

When the mold forms a number of ravioli, a component 60, suitable for facilitating separation of ravioli thus formed, goes into action.

In fact, continuous production of the ravioli causes them to remain, once formed, possibly joined to each other: device 60 avoids this shortcoming.

A plurality of brushes/bristles 61 radially extend from cylinder 62 of said device 60.

Brushes 61 being of material and size suitable for producing separation following an impact; for example they could be made of synthetic material.

Device 60 is located at the end of module 1 forming line; by transversely rotating with respect to the ravioli outlet direction, it interacts by means of its bristles against the ravioli and, impinging on them, causes separation of single ravioli.

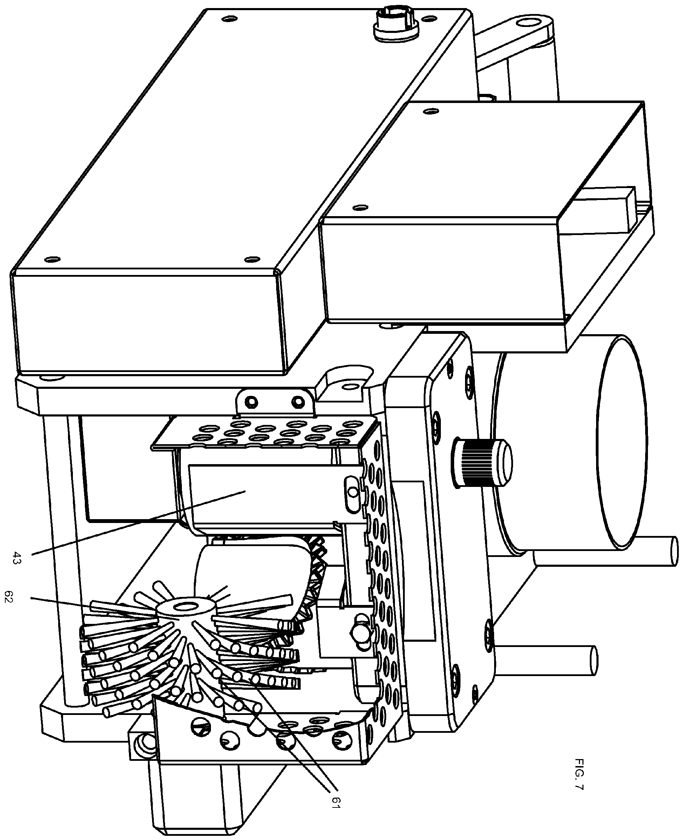

Figures 7 and 14 show in detail the aforesaid component and arrangement thereof with respect to the pasta conveyor belt 21 (perpendicular thereto).

Roller 60 is driven by belt 65 which receives motion from motor 15 itself.

The ravioli are collected in a dedicated discharge chute and, this way, ravioli production is continuous.

As already said, electric motor 15, disposed in the crankcase, drives, with a transmission made up by toothed belt 16B, gears 16 and bevel gear pair 17, planetary mixer 12 of the kneading machine.

Motor 15 itself, through a set of gears 2, 3, 4, 5 and 6, and toothed belts 8 situated on the plate supporting the back of the machine, drives all other moving components of the machine.

The single electric motor 15, in addition to being an extremely simple solution, guarantees that all moving parts in the machine are kept in phase.

The described apparatus exhibits the great advantage of being modular.

First module 10 is the suitable one for kneading which, constructed as a standalone unit, constitutes an actual planetary kneading machine which, disconnected from other assemblies, can operate independently.

Extruder 19, fed by feed screw 15, allows to form short or long pasta of different shapes.

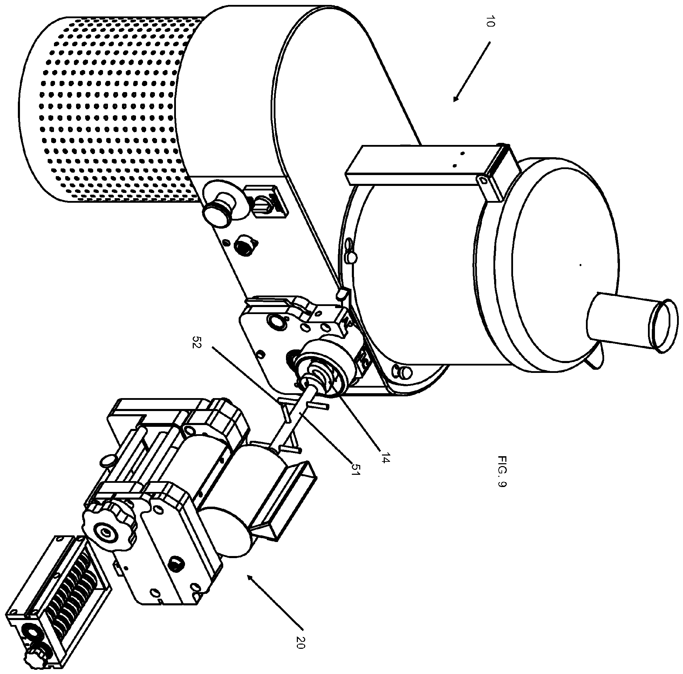

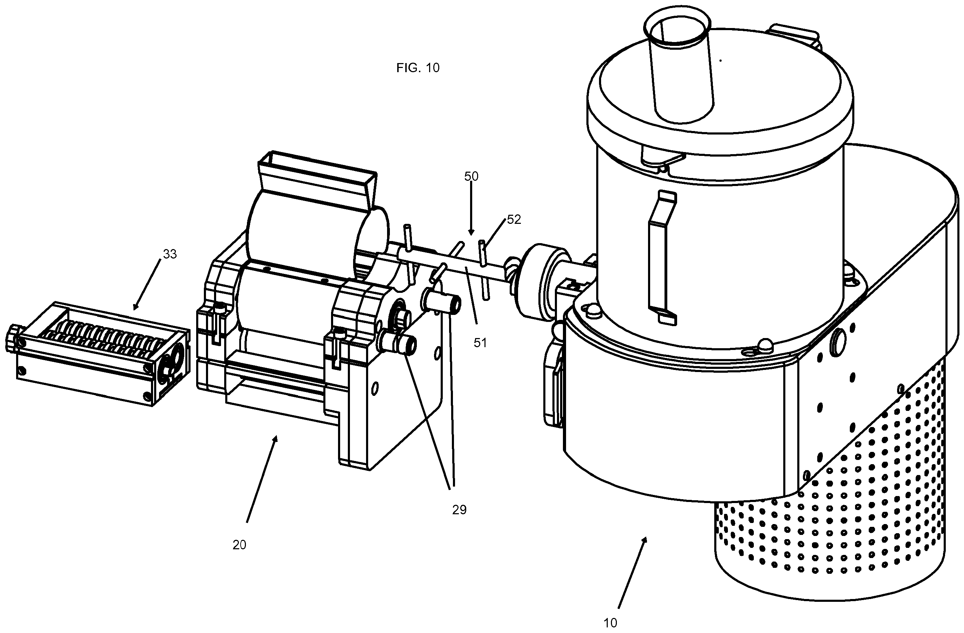

The second module can be readily attached to the first module (Figure 9, position b): the coupling being carried out, referring to Figure 10, by inserting rods 29 in holes 9: at the end of travel the rods, which have a groove in the end portion, are secured in position by manually rotating handle 18.

By inserting rods 29, shaft 30 which transmits motion to the dough machine, is also inserted in hollow shaft 31 with slotted cavity: in this way the shaft receives motion from the hollow shaft, driven, in turn, by the power take-off obtained by powering first module 10.

Second module 20, construed as a stand-alone machine, constitutes an actual dough machine. As such, it can produce sheets of different thickness, adjustable with handle 21, or pasta in strips, by inserting a drawplate 33, insertable in suitable guides 34. Of course this is feasible when production of ravioli is not required.

Operation takes place, similarly to the second module, through power take-off acquired by the gear from the dough machine shaft.

Only first two modules 10 and 20 could also be employed, which together make up a kneading-sheeting assembly, capable of kneading and continuously producing various types of dough, from the continuous one, required for ravioli, to the one in strips.

Third module 1 is applied to the dough machine in a way quite similar to that of the drawplate described hereinabove and makes the machine suitable for producing ravioli.

Module 1 is provided with grooves that precisely fit into guides 34 and employs the same power take-off 35.

The three modules, coupled as described above, make up the whole modular machine for continuously producing ravioli.

Referring to what already mentioned, the following advantages, achieved by the present invention, are to be noted: versatility of usage, since the three single modules can also operate separately and with the accessories (extruder and drawplate) the machine can also produce other types of pasta, long or short, in addition to ravioli;
high throughput, since continuous production eliminates dead times;
space saving, because a single assembly is able to carry out the tasks of three different machines;
energy saving, as only one motor is used;
less chance for human error, since the present invention exhibits a higher level of automation of the entire process than that of three separate devices.

## Claims

1. Modular machine (1, 10, 20) for continuously obtaining the formation of ravioli, of the type comprising three modules:
a. a kneading machine (10), first module, capable of kneading, with planetary mixer (11), the components of the dough for ravioli; said kneading machine being actuated by an electric motor (15) with power take-off for transmitting the motion to all the other moving members of the other modules (20, 1), which thus are always in phase with each other, a gradual discharge device of the "kneading machine" module comprising a feed screw (14) driven with power take-off by the electric motor (15) of the group,
b. a dough machine (20), for producing the dough, receiving the dough unloaded from the feed screw (14), continuously produces the dough whose thickness is easily adjustable through a knob (21), said dough being subsequently laid down and conveyed on a belt,
c. a continuous ravioli maker (1),
wherein said modular machine further comprises:
- a mechanism (50) situated on the upper part of the dough machine (20), adapted to facilitate the insertion of the dough into the dough machine (20),
- an element (60) adapted to facilitate the separation of the formed ravioli, said element (60) being arranged at the end of the forming line of the continuous ravioli maker (1) and transverse to the ravioli outlet direction, i.e. perpendicular with respect to the dough conveyor belt, said element (60) being driven by a belt (65) which receives motion from the motor (15),
**characterized in that**:
- said mechanism (50) is at least one rotatable reel, constituted by a central rod (51) and a plurality of tips (52) or projections which are radially extended therefrom with respect to the axis of the rod itself; the function of the projections (52) is that of breaking the dough and facilitating the insertion thereof between the rollers (58) of the dough machine (20) ; said rod (51) is coaxial and integral with the axis of the feed screw (14) from which it receives motion; the rod (51) is parallel to the rotation axis of the underlying pick-up rollers (58), such that the tips are arranged perpendicular to said axes;
- said element (60) is constituted by a plurality of brushes or bristles (61) which are radially extended from a cylinder (62); said brushes or bristles (61) being of material and size suitable for creating the separation following impact.

## Patentansprüche

1. Modulare Maschine (1, 10, 20) zur kontinuierlichen Herstellung von Ravioli, des Typs der drei Module umfasst, und zwar:
a.eine Knetmaschine (10), das erste Modul, die in der Lage ist zum Kneten, mit einem Planetenmischer (11), die Bestandteile des Teigs für Ravioli, wobei die besagte Knetmaschine durch einen Elektromotor (15) mit einer Leistungsaufnahme betätig wird, um die Bewegung auf die anderen beweglichen Elemente der anderen Module (20, 1) zu übertragen, die sich dann immer gegenseitig in Phase befinden, wobei eine Vorrichtung zum allmählichen Entladen der "Knetmaschine" eine Förderschnecke (14) aufweist, die mit einer Leistungsaufnahme durch den Elektromotor (15) der Baueinheit angetrieben wird,
b. eine Maschine (20) zur Herstellung eines teig, um den teig zu erzeugen, die den aus der Förderschnecke (14) entladenen Teig empfängt und in kontinuierlicher Weise den teig herstellt, dessen Dicke leicht mittels eines Knopfes eingestellt werden kann, wobei der besagte teig anschließend gelegt und auf einem Förderband transportiert wird ,
c. eine Vorrichtung (1) zur kontinuierlichen Herstellung von Ravioli,
wobei die besagte modulare Maschine ferner umfasst:
- einen Mechanismus (50), der sich auf der Oberseite der Maschine (20) zur Herstellung des teige (20) befindet und angepasst ist, um das Einführen des Teigs in der Maschine (20) zur Herstellung des teige zu erleichtern,
- ein Element (60) das geeignet ist, die Trennung geformten Ravioli zu erleichtern, wobei das besagte Element (60) am Ende der Formlinie zur kontinuierlichen Herstellung von Ravioli (1) und quer zur Ausgangsrichtung der Ravioli, und zwar mit Bezug zum Förderband des Teiges, wobei das besagte Element (60) durch einen Riemen (65) angetrieben wird, der die Bewegung vom Motor (15) empfängt, **dadurch gekennzeichnet,dass**:
- der besagte Mechanismus (60) durch zumindest eine drehbare Rolle gebildet wird, die aus einem zentralen Stab (51) und einer Vielzahl von Spitzen (52) oder Vorsprüngen besteht,die sich in radialer Richtung in Bezug auf die Achse derselben Rolle erstrecken; wobei die Funktion der Vorsprünge (52) besteht darin, dass sie den Teig brechen und seine Einfügung zwischen den Rollen (58) der Maschine (20) zur Herstellung des teig erleichtern; wobei der besagte Stab mit der Achse der Förderschnecke (14) koaxial und integral ist, aus der sie ihre Bewegung aufnimmt; wobei der besagte Stab (51) mit der Drehachse der darunterliegenden Aufnahmerollen (58) derart parallel ist, dass die Spitzen senkrecht zu den genannten Achsen angeordnet sind;
- wobei das besagte Element (60) aus einer Vielzahl von Bürsten oder Borsten (61) besteht,die sich in radialer Richtung aus einen Zylinder (62) erstrecken; wobei die besagten Bürsten oder Borsten (61) aus einem Material bestehen, dessen Material und Abmessungen geeignet sind, um die Trennung nach einem Aufprall zu schaffen.

## Revendications

1. Machine modulaire (1, 10, 20) permettant d'obtenir de façon continue la formation de raviolis, du type comprenant trois modules:
a. une machine de pétrissage (10), le premier module, capable de pétrir, avec un mélangeur planétaire (11), les composants de la pâte à ravioli; ladite machine de pétrissage étant actionnée par un moteur électrique (15) avec une puissance de sortie pour transmettre le mouvement à tous les autres éléments mobiles des autres modules (20, 1), qui sont alors toujours en phase l'un avec l'autre, un déchargement progressif du module de la "machine de pétrissage" comprenant une vis d'alimentation (14) entraînée avec une puissance électrique de sortie par le moteur électrique (15) du groupe,
b.une machine (20) de production de pâte, afin de produire la pâte, qui reçoit le mélange de pâte déchargé par la vis d'alimentation (14), produisant d'une manière continue la pâte dont l'épaisseur peut être facilement réglé au moyen d'un bouton (21), ladite pâte étant ensuite déposée et transportée sur un convoyeur,
c. un dispositif (1) pour la production continue de raviolis,
dans lequel ladite machine modulaire comprend en outre:
- un mécanisme (50) situé sur la partie supérieure de la machine de production (20) de pâte, adapté de manière à faciliter l'introduction de la pâte dans la machine de production de pâte (20),
- un élément (60) adapté pour faciliter la séparation des raviolis formés,
ledit élément (60) étant disposé à l'extrémité de la ligne de formation de l' appareil (1) de production en continu de raviolis et transversalement à la direction de sortie des raviolis, soit perpendiculaire à la bande transporteuse de la pâte, ledit élément (60) étant entraîné par une courroie (65) qui reçoit le mouvement du moteur (15),
**caractérisé en ce que**:
- ledit mécanisme (60) est constitué par au moins une bobine rotative, constituée d'une tige centrale (51) et d'une pluralité de pointes (52) ou des saillies qui se développent dans la direction radiale a partir de cela, par rapport à l'axe de la tige elle - même; la fonction des saillies (52) consiste à briser la pâte et à faciliter l'insertion de celle-ci entre les rouleaux (58) de la machine de production (20) de la pâte; ladite tige (51) est coaxiale et solidaire de l'axe de la vis d'alimentation (14) à partir de laquelle il reçoit le mouvement; la tige (51) est parallèle à l'axe de rotation des rouleaux d'entraînement placés au dessous, de manière que les pointes sont disposées perpendiculairement auxdits axes;
- ledit élément (60) est constitué par une pluralité de brosses ou les poils (61) qui se développent dans la direction radiale par un cylindre (62) ; lesdites brosses ou poils (61) étant formés à partir d'un matériau et avec des dimensions appropriées pour créer l'effet après une séparation.
